# EUROPEAN PATENT APPLICATION

(11) **EP 4 645 647 A1**
(43) Date of publication of application: **05.11.2025**
(21) Application number: 24305665.2
(22) Date of filing: 29.04.2024
(51) Int. Cl.: H02J 7/34, G01R 31/00, G01R 31/389, H02M 3/155

(54) **DEVICE FOR GENERATING BATTERY CURRENT AND CORRESPONDING METHOD**

(71) Applicant: NXP USA, Inc., Austin TX 78735 (US)
(72) Inventor: Perruchoud, Philippe Jean-Pierre, 31023 Toulouse Cedex 1 (FR); Kleinpenning, Jeroen, 5656 AG Eindhoven (NL)
(74) Representative: Schmütz, Christian Klaus Johannes

(57) **Abstract**

The present disclosure relates to a device for generating a battery current at a battery, wherein the device comprises: first and second battery terminals for connection to the battery; first and second inverter terminals for connection to an inverter so that an inverter capacitor of the inverter can be coupled between the first inverter terminal and the second inverter terminal; and an inductor; wherein the device comprises a first circuit unit configured to form with the inverter capacitor a buck converter to transfer electrical energy from the battery to the inverter capacitor; wherein the device comprises a second circuit unit configured to form with the inverter capacitor a boost converter to transfer electrical energy from the inverter capacitor to the battery; and wherein the inductor is a component of both the first and second circuit units. The present disclosure also relates to a system including the device and a method for the device.

## Description

### TECHNICAL FIELD

The present disclosure relates to a device for generating a battery current, to a system including the device, and to a method for the device.

### BACKGROUND

The trend towards improving batteries for storing electrical energy has grown over several years and supported the use of batteries in many different systems. Nowadays, batteries are often used in vehicles, especially electrically powered vehicles. Batteries may include an electrochemical basis for storing electrical energy. In particular, a battery may be a rechargeable battery.

An electric battery may include a large number of cells. Several cells may be connected in parallel to form a group. In addition, several groups (each comprising a plurality of cells connected in parallel) may be connected in series.

Electrochemical impedance spectroscopy, which may also be referred to as impedance spectroscopy or impedance measurement, may be used to determine the impedance of a battery. The determination of the impedance of the battery may refer to the determination of the impedance of one or more cells of the battery or to the determination of the impedance of the entire battery (i.e. all cells of the battery). Impedance spectroscopy may provide valuable information about the battery and/or the cells of the battery. For example, impedance spectroscopy or the impedance of the battery may be used to estimate a state of charge of the battery and/or a state of health/aging of the battery or the temperature of the cells. Corresponding determinations may also be performed for one or more cells of the battery.

For electrochemical impedance spectroscopy, an alternating current is often caused to flow through the battery. The alternating current may also be referred to as the battery current, measuring current or impedance spectroscopy measuring current. The battery current may flow completely or proportionately through the cells of the battery. The frequency of the battery current can be between 100 mHz and 5000 Hz, for example. A change in the impedance of the battery may indicate a change in the temperature of the battery, its remaining capacity or state of health.

Given that a battery often includes a large number of cells (battery cells), it is of interest to detect the impedance of the battery at the battery level, the cell level or group level. Due to the large number of cells, the technical measures for impedance spectroscopy of cells may cause a large amount of space and/or an increase the complexity of a system including the battery. The corresponding need for space and/or the complexity to perform the impedance spectroscopy may also lead to high costs to provide the battery and/or the system.

### SUMMARY

This summary is provided to introduce a selection of concepts in a simplified form that are further described below in the detailed description. This summary is not intended to identify key features or essential features of the claimed subject matter, nor is it intended to be used to limit the scope of the claimed subject matter.

Aspects of the disclosure are defined in the accompanying claims.

According to a first aspect of the present disclosure, a device for generating a battery current at a battery is provided, wherein the device comprises: first and second battery terminals for connection to the battery; first and second inverter terminals for connection to an inverter so that an inverter capacitor of the inverter can be coupled between the first inverter terminal and the second inverter terminal; and an inductor; wherein the device comprises a first circuit unit configured to form with the inverter capacitor a buck converter to transfer electrical energy from the battery to the inverter capacitor; wherein the device comprises a second circuit unit configured to form with the inverter capacitor a boost converter to transfer electrical energy from the inverter capacitor to the battery; and wherein the inductor is a component of both the first and second circuit units.

In one or more embodiments, the device is configured to activate either the first circuit unit or the second circuit unit.

In one or more embodiments, the device comprises a control unit coupled to the first and second circuit units, the control unit being configured to control the first and second circuit units such that either the first circuit unit or the second circuit unit is activated.

In one or more embodiments, the device is configured to receive or generate an alternating reference signal representing successive reference periods each divided into a first reference period part and a second reference period part, wherein the device, in particular the associated control unit, is configured to activate the first circuit unit in each first reference period part and to deactivate the second circuit unit in each first reference period part, and wherein the device, in particular the associated control unit, is configured to activate the second circuit unit in each second reference period part and to deactivate the first circuit unit in each second reference period part.

In one or more embodiments, the device comprises a first string, a second string and a third string, wherein the first and second strings each extend from the first battery terminal to the second battery terminal, wherein the first string comprises a first diode and a first semiconductor switch, wherein the second string comprises a second and third semiconductor switch and a third and fourth diode, which are connected one behind the other, wherein a forward direction of the first diode is directed towards the first battery terminal, wherein the first, second and third semiconductor switches are controllable by a or the control unit, wherein the third string extends from a first node, which is arranged in the first string between the first diode and the first semiconductor switch, to a second node, which is arranged in the second string between the third semiconductor switch and the second diode, wherein a forward direction of the second and/or third diode is directed towards the second node, wherein the third string comprises the inductor, wherein the first inverter terminal is coupled to a third node arranged in the second string between the second and third semiconductor switches, and wherein the second inverter terminal is coupled to a fourth node arranged in the second string between the second and third diode.

In one or more embodiments, the control unit is configured to activate the first circuit unit by closing the second semiconductor switch while alternately closing and opening the first semiconductor switch; and wherein the device is configured to deactivate the first circuit unit by opening the second semiconductor switch.

In one or more embodiments, the device is configured to activate the second circuit unit by closing the third semiconductor switch while alternately closing and opening the first semiconductor switch; and wherein the device is configured to deactivate the second circuit unit by opening the third semiconductor switch.

In one or more embodiments, the device comprises a first string, a second string and a third string, wherein the first and second strings each extend from the first battery terminal to the second battery terminal, wherein the first string comprises a first diode and a first semiconductor switch, wherein the second string comprises a second, third, fourth and fifth semiconductor switch, which are connected one behind the other, wherein the first to fifth semiconductor switches are controllable by a or the control unit, wherein the third string extends from a first node, which is arranged in the first string between the first diode and the first semiconductor switch, to a second node, which is arranged in the second string between the third and fourth semiconductor switches, wherein the third string comprises the inductor, wherein the first inverter terminal is coupled to a third node arranged in the second string between the second and third semiconductor switches, and wherein the second inverter terminal is coupled to a fourth node arranged in the second string between the fourth and fifth semiconductor switches.

In one or more embodiments, the device is configured to activate the first circuit unit by closing the second and fourth semiconductor switches while alternately closing and opening the first semiconductor switch; and/or wherein the device is configured to deactivate the first circuit unit by opening the second and fourth semiconductor switches; and/or wherein the device is configured to activate the second circuit unit by closing the third and fifth semiconductor switches while alternately closing and opening the first semiconductor switch; and/or wherein the device is configured to deactivate the second circuit unit by opening the first and fifth semiconductor switches.

In one or more embodiments, the first circuit unit comprises: the first and second battery terminals, the first and second inverter terminals, the first, second and third strings, the second semiconductor switch, either the second diode or the fourth semiconductor switch, the inductor, the first diode, and the first semiconductor switch; wherein the second circuit unit comprises: the first and second battery terminals, the first and second inverter terminals, the first, second and third strings, either the third diode or the fifth semiconductor switch, the third semiconductor switch, the inductor, the first diode, and the first semiconductor switch.

In one or more embodiments, the first battery terminal is coupled to the first inverter terminal, wherein the device comprises a fourth string and a fifth string, wherein the fourth string extends from the first battery terminal to the second battery terminal, wherein the fourth string comprises a sixth and seventh semiconductor switch, wherein the fifth string extends from a fifth node, which is arranged in the fourth string between the sixth and seventh semiconductor switches, to the second inverter terminal, and wherein the fifth string comprises the inductor.

In one or more embodiments, the device is configured to activate the first circuit unit by opening the sixth semiconductor switch while alternately closing and opening the seventh semiconductor switch; and/or wherein the device is configured to activate the second circuit unit by opening the seventh semiconductor switch while alternately closing and opening the seventh semiconductor switch.

According to a second aspect of the present disclosure, a system is provided, which comprises: a battery, a device according to the first aspect and/or any of the preceding embodiments, and an inverter comprising an inverter capacitor.

In one or more embodiments, the inverter is a bridge inverter.

According to a third aspect, a method for a device is provided, wherein the device comprising first and second battery terminals for connection to a battery, first and second inverter terminals for connection to an inverter such that an inverter capacitor of the inverter is coupled between the first inverter terminal and the second inverter terminal, and a inductor, wherein the device comprises a first circuit unit configured to form, together with the inverter capacitor, a buck converter, wherein the device comprises a second circuit unit configured to form, together with the inverter capacitor, a boost converter, wherein the inductor forms a part of both the first and second circuit units, and wherein the method comprises the steps of a) activating the first circuit unit to transfer electrical energy from the battery to the inverter capacitor while the second circuit unit is deactivated, and b) activating the second circuit unit to transfer electrical energy from the inverter capacitor to the battery while the first circuit unit is deactivated.

### DESCRIPTION OF DRAWINGS

Embodiments of the present disclosure will be described in more detail with reference to the appended drawings. It is to be noted, however, that the appended drawings illustrate only typical embodiments of the present disclosure and are therefore not to be considered limiting of its scope, such that other equally effective embodiments may be implemented. Advantages of the subject matter claimed will become apparent to those skilled in the art upon reading this description in conjunction with the accompanying drawings, in which like reference numerals have been used to designate like elements, and in which:
Figure 1 shows a simplified block diagram of an embodiment of the system.
Figures 2, 3 and 4 show a simplified block diagram of an embodiment of the device.
Figure 5 shows a simplified block diagram of another embodiment of the device.
Figure 6 shows a simplified block diagram of another embodiment of the device.
Figures 7, 8 and 9 show a simplified embodiments of wave forms of signals of the device and system.
Figure 10 shows an embodiment of a simplified flow chart of the method.

### DESCRIPTION OF EMBODIMENTS

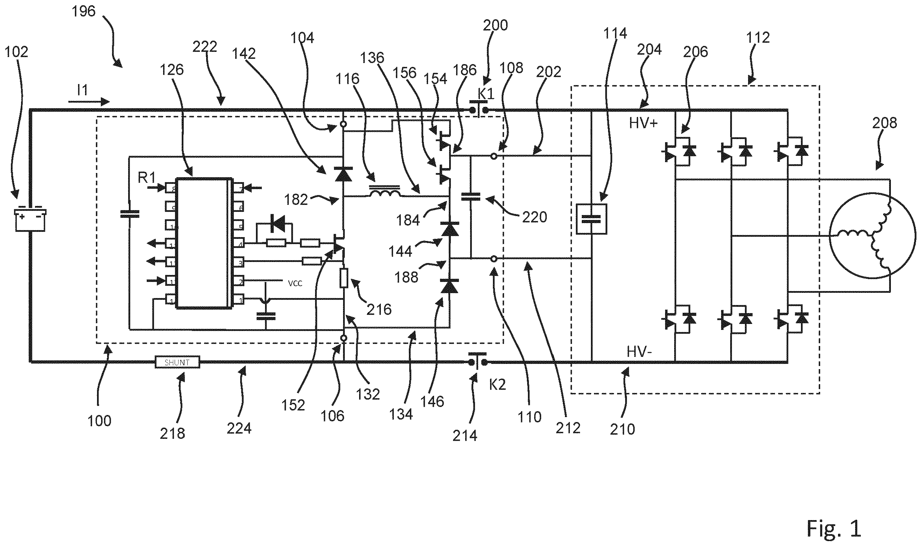

Figure 1 schematically illustrates an example of a system 196 comprising a battery 102 and an inverter 112. The inverter 112 may include an electrical line referred to as a first rail line 204. In addition, the inverter 112 may include another electrical line referred to as a second rail line 210. The first rail line 204 may be coupled to a first terminal of the battery 102 via a switch 200, and the second rail line 210 may be coupled to another terminal of the battery 102 via another switch 214. In an example, the first rail line 204 extends to the switch 200, and a first connecting line 222 may extend from the switch 200 to the first terminal of the battery 102. The second rail line 210 may extend to the switch 214. A second connecting line 224 may extend from the switch 214 to the second terminal of the battery 102.

If the switches 200, 214 are closed, the DC voltage of the battery 102 may be provided between the two rail lines 204, 210. If at least one of the two switches 200, 214 or both switches 200, 214 are opened again, then the DC voltage of the battery 102 is not present between the two rail lines 204, 210. The inverter 112 may be configured to generate and/or output an AC voltage from the DC voltage of the battery 102 for an electric drive comprising, for example, an electric motor 208.

The system 196 may further include the device 100. The device 100 may be coupled to both the battery 102 and the inverter 112, in particular an inverter capacitor 114 of the inverter 112. The device 100 is used to generate a battery current I1 through the battery 102, and the battery current I1 may be used to perform electrochemical impedance spectroscopy. By performing the electrochemical impedance spectroscopy based on the battery current I1, an impedance of the battery 102 can be determined. Further information, such as the aging of the battery 102, a temperature of the battery 102, and/or other properties of the battery 102, can be determined from the impedance of the battery 102.

The generation of the battery current I1 via the device 100 can be performed, for example, if no electrical energy needs to be provided for the electrical drive via the inverter 112. In an example, the generation of the battery current I1 via the device 100 is performed if the switch 200 and/or the switch 214 are open.

If possible, the battery current I1 for the electrochemical impedance spectroscopy should be generated cost-efficiently, with low electrical losses and with low technical complexity.

The design of the device 100 is based on the idea of using the device 100 to first transfer electrical energy from the battery 102 to the inverter capacitor 114, and then transfer the previously transferred energy back from the inverter capacitor 114 to the battery 102. As can be seen from the following explanation of the device 100, the device 100 is adapted to enable the exchange of electrical energy between the battery 102 and the inverter capacitor 114. The device 100 can thus utilize pre-existing components, such as the inverter capacitor 114, to exchange electrical energy. By using already existing components, the possibility is created to generate the battery current I1 with a low technical complexity. The use of existing components also achieves a high level of cost efficiency. The exchange of electrical energy between the battery 102 and the inverter capacitor 114 via the device 100 prevents a high energy loss for generating the battery current I1, so that via the device 100 it is also possible to achieve the battery current I1 with very low electrical losses.

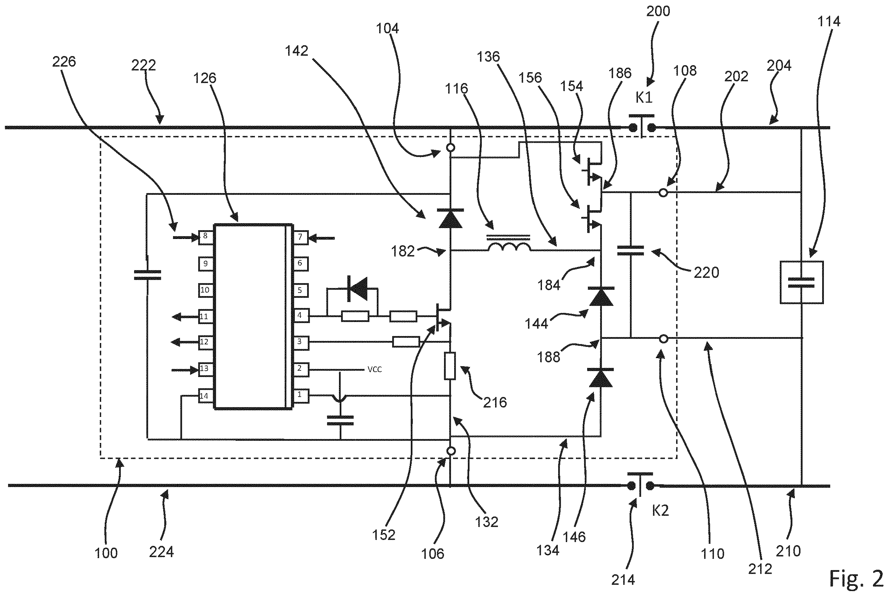

In Figure 2, an example of the device 100 is shown schematically. Furthermore, parts of the system 196, such as the inverter capacitor 114, the first connection line 222, and the second connection line 224, are schematically shown in Figure 2. The following explanations in connection with the device 100 may, in an example, refer to the device 100 alone, for example if the device 100 is designed as a separate component. The following explanations in connection with the device 100 may, in an example, apply in an analogous manner to a device 100 forming part of the system 196.

The device 100 includes a first terminal 104, referred to as the first battery terminal 104, and a second terminal 106, referred to as the second battery terminal 106. The first and second battery terminals 104, 106 can be used to connect the device to the battery 102. In an example, the first battery terminal 104 may be coupled to the first connection lead 222 so as to provide an electrical connection between the first terminal of the battery 102 and the first battery terminal 104 of the device 100. In an example, the second battery terminal 106 can be coupled to the second connection line 224 so that an electrical connection can be formed between the second terminal of the battery 102 and the second battery terminal 106 of the device 100. The device 100 may be coupled to the battery 102 via the first and second battery terminals 104, 106. Via the first and second battery terminals 104, 106, it is possible for the device 100 to receive electrical energy from the battery 102 and/or to transfer electrical energy (back) to the battery 102.

The device 100 includes a terminal 108, referred to as the first inverter terminal 108, and another terminal 110, referred to as the second inverter terminal 110. The first and second inverter terminals 108, 110 can be used to connect the device 100 to the inverter 112, in particular for connecting the device 100 to the inverter capacitor 114 of the inverter 112. The first and second inverter terminals 108, 110 of the device 100 may be connected to the inverter 112 and/or the inverter capacitor 114 such that the inverter capacitor 114 is coupled between the first inverter terminal 108 and the second inverter terminal 110. For example, the first inverter terminal 108 may be coupled to the first rail line 204 and/or a first terminal of the inverter capacitor 114 via the signal connection 202 such that an electrical connection may be established between the first terminal of the inverter capacitor 114 and the first inverter terminal 108 of the device 100. In an example, the second inverter terminal 110 may be coupled to the second rail line 210 and/or a second terminal of the inverter capacitor 114 via a signal connection 212 such that an electrical connection may be established between the second terminal of the inverter capacitor 114 and the second inverter terminal 110 of the device 100. Via the first and second inverter terminals 108, 110, it is possible for the device 100 to transfer electrical energy to the inverter capacitor 114 and/or to receive (back) electrical energy from the inverter capacitor 114.

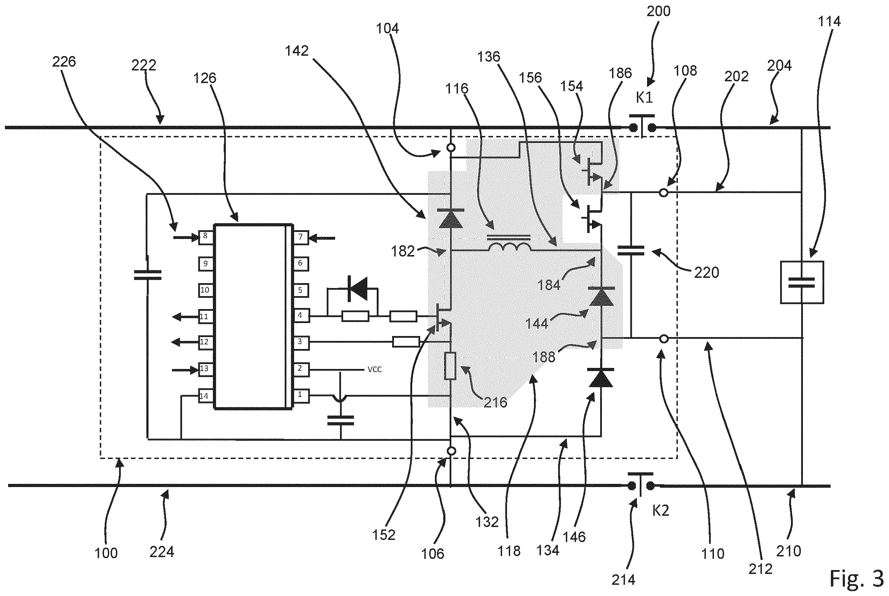

The device 100 includes a first circuit unit 118, and the first circuit unit 118 is configured to operate with and/or form a buck converter with the inverter capacitor 114 to transfer electrical energy from the battery 102 to the inverter capacitor 114. In an example, the device 100 may include the inverter capacitor 114 and/or the inverter 112. If the inverter capacitor 114 is coupled between the first inverter terminal 108 and the second inverter terminal 110, then the first circuit unit 118 and the inverter capacitor 114 may together form the buck converter. The example device 100 of Figure 2 is illustrated again in Figure 3. In Figure 3, a part of the device 100 is shaded in gray, wherein the gray shaded part of the device 100 may schematically represent an example of the first circuit unit 118.

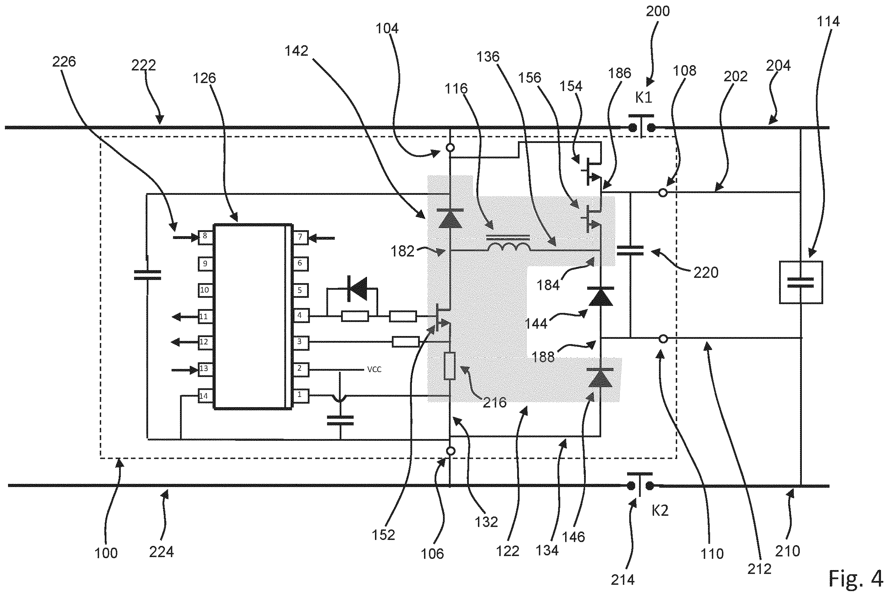

The device 100 includes a second circuit unit 122, and the second circuit unit 122 is configured to operate with and/or form a boost converter with the inverter capacitor 114 to transfer electrical energy from the inverter capacitor 114 to the battery 102. If the inverter capacitor 114 is coupled between the first inverter terminal 108 and the second inverter terminal 110, then the second circuit unit 122 and the inverter capacitor 114 may together form the boost converter. The example device 100 of Figure 2 is illustrated again in Figure 4. In Figure 4, a part of the device 100 is shaded in gray, wherein the gray shaded part of the device 100 may schematically represent an example of the second circuit device 122.

In an example, the first circuit unit 118 and the second circuit unit 122 may include a shared component or multiple shared components. Further, the first circuit unit 118 and the second circuit unit 122 may each include at least one component associated solely with the first circuit unit 118 and solely with the second circuit unit 122, respectively. In an example, the first circuit unit 118 and the second circuit unit 122 may differ in having at least one component that is not present in the respective other circuit unit 118, 122. For example, the first circuit unit 118 and the second circuit unit 122 may differ by the second semiconductor switch 154, the third semiconductor switch 156, the second diode 144, and/or the third diode 146. In an example, the second semiconductor switch 154 and/or the second diode 144 may be associated with the circuit unit 118 only. In an example, the third semiconductor switch 156 and/or the third diode 146 may be associated with the second circuit unit 122 only.

The device 100 includes an inductor 116. The inductor 116 may be configured as a choke coil. The inductor 116 may have an inductance of at least 50 µH, at least 200 µH, or at least 500 µH. The inductor 116 is both a component of the first circuit unit 118 and a component of the second circuit unit 122. As an effect, the inductor 116 may be a common component of both the first and second circuit units 118, 122.

The device 100 may be used to receive electrical energy from the battery 102 via the first circuit unit118, which may operate as a buck converter in conjunction with the inverter capacitor 114, and to transfer the received electrical energy to the inverter capacitor 114 via the first and second inverter terminals 108, 110. The first circuit unit 118 may be configured to transfer electrical energy from the battery terminals 104, 106 to the inverter terminals 108, 110. Provided the battery 102 is coupled to the battery terminals 104, 106 and provided the inverter capacitor 114 is coupled between the inverter terminals 108, 110, the first circuit unit 118 may be used to transfer electrical energy from the battery 102 to the inverter capacitor 114.

The device 100 may be used to receive electrical energy from the inverter capacitor 114 via the first and second inverter terminals 108, 110 and to transfer the received electrical energy to the battery 102 via the first and second battery terminals 104, 106 via the second circuit unit 122, which may operate in conjunction with the inverter capacitor 114 as a boost converter. The second circuit unit 122 may be configured to transfer electrical energy from the inverter terminals 108, 110 to the battery terminals 104, 106. Provided the battery 102 is coupled to the battery terminals 104, 106, and provided the inverter capacitor 114 is coupled between the inverter terminals 108, 110, the second circuit unit 122 may be used to transfer electrical energy from the inverter capacitor 114 to the battery 102.

The inductor 116 may require a space being large compared to the space requirement for the other components of the first and second circuit units 118, 122. The common use of the inductor 116 may eliminate the need for another inductor, so that the device 100 may be compact in design. The common use of the inductor 116 can also save manufacturing costs for the device 100. By allowing the device 100 to operate as a buck converter via the first circuit unit 118 and the coupled inverter capacitor 114 and as a boost converter via the second circuit unit 122 and the coupled inverter capacitor 114, the device 100 allows electrical energy to be alternately exchanged between the battery 102 and the inverter capacitor 114. Due to the transfer of electrical energy from the battery 102 to the inverter capacitor 114 and/or due to the transfer of electrical energy from the inverter capacitor 114 to the battery 102, the battery current can be generated by the battery 102. The exchange of electrical energy between the battery 102 and the inverter capacitor 114, and vice versa, can be performed via the device 100 without incurring high electrical losses. Therefore, the device 100 allows the battery current I1 to be generated with low electrical losses and high efficiency.

In an example, the buck converter may be understood as a switching DC-DC converter whose DC voltage at the output is less than its DC voltage at the input. The input of the buck converter may be formed by the first and second battery terminals 104, 106. The output of the buck converter may be formed by the first and second inverter terminals 108, 110, as the inverter capacitor 114 may be coupled between the inverter terminals 108, 110.

The buck converter may include a semiconductor switch, a diode, an inductor, and a capacitor. The capacitor of the buck converter may be formed by the inverter capacitor 114. Against this background, if the inverter capacitor 114 is coupled between the inverter terminals 108, 110, the first circuit unit 118 may be configured to operate as a buck converter. The semiconductor switch of the buck converter may be formed by a first semiconductor switch 152 of the device 100. The diode of the buck converter may be formed by the second diode 144 of the device 100. The inductor of the buck converter may be formed by the inductor 116 of the device 100. The first circuit unit 118 may further include a first diode 142 and/or a resistor 216.

In an example, the boost converter may be understood as a switching DC-DC converter whose DC voltage at the output is greater than its DC voltage at the input. The input of the boost converter may be formed by the first and second inverter terminals 108, 110, as the inverter capacitor 114 may be coupled between the inverter terminals 108, 110. The output of the boost converter may be formed by the first and second battery terminals 104, 106.

The boost converter may include an inductor, a semiconductor switch, a diode, and a capacitor. The capacitor of the boost converter may be formed by the inverter capacitor 114. Against this background, the second circuit unit 122 may be configured to operate as a boost converter if the inverter capacitor 114 is coupled between the inverter terminals 108, 110. The boost converter inductor may be formed by the inductor 116 of the device 100. The semiconductor switch of the boost converter may be formed by the first semiconductor switch 152 of the device 100. The diode of the boost converter may be formed by a third diode 146 of the device 100. The second circuit unit 122 may further include the first diode 142 and/or a resistor 216.

The device 100 may utilize the inverter capacitor 114 to cause the battery current I1 to flow through the battery 102. Therefore, the device 100 provides the ability for the inverter capacitor 114 to serve a dual function. The inverter capacitor 114 may serve as an inverter capacitor of the inverter 112. If the inverter 112 is not actively used, the inverter capacitor 114 may be used by the device 100 to cause the exchange of electrical energy between the battery 102 and the inverter capacitor 114, and vice versa, so that battery power is producible at the battery 102. The device 100 may also be considered to be cost effective and space saving for the reason that the device 100 enables dual use of the inverter capacitor 114. As an effect, no separate capacitor is required by the device 100 that includes, for example, at least a similar storage capacity as the inverter capacitor 114.

The device 100 may include a capacitor 220, which is referred to as a filter capacitor. The filter capacitor 220 is used to filter a DC voltage between the inverter terminals 108, 110. In an example, the capacitance of the filter capacitor 220 may be so small that the capacitance of the filter capacitor 220 is not large enough to generate a battery current sufficient for electrochemical impedance spectroscopy. The capacitance of the filter capacitor 220 may be smaller than a capacitance of the inverter capacitor 114 by a factor of at least ten (10) at least hundred (100), or at least thousand (1000). In an example, the inverter capacitor 114 may have a capacitance of at least 100 µF, at least 500 µF, or at least 1 mF.

With reference to Figure 1, it has been explained that the first rail line 204 of the inverter 112 may be coupled to a first terminal of the battery 102 via the switch 200 and the second rail line 210 may be coupled to a second terminal of the battery 102 via the further switch 214. For active operation of the inverter 112, if the inverter 112 is to provide an AC voltage at the output, the switches 200, 214 can be closed so that the DC voltage of the battery 102 is present at the input of the inverter 112. The inverter 112 can generate the AC voltage at the output based on the DC voltage at the input of the battery 102. If the operation of the inverter 112 is deactivated so that the inverter 112 is not used to provide AC voltage at the output, the switches 200, 214 may be opened so that the DC voltage from the battery 102 is not applied to the input of the inverter 112 and, in particular, is not applied between the first rail line 204 and the second rail line 210.

For using the device 100 to generate the battery current through the battery 102, it may be provided that at least one of the switches 200, 214 is or turned to be open. By opening the at least one switch 200, 214, the inverter 112 may be driven in a deactivated state. If the inverter 112 is in the deactivated state, the device 100 may utilize the inverter capacitor 114 as an energy storage device, in particular as an energy buffer.

For further explanation, it is assumed that the switches 200, 214 are in an open state. As an effect, the electrical connection between the first connecting line 222 and the first rail line 204 is interrupted by the switch 200. As another effect, the electrical connection between the second connecting line 224 and the second rail line 210 is interrupted by the switch 214.

In an example, the device 100 is configured such that the device 100 activates either the first circuit unit 118 or the second circuit unit 122. As an effect, the first circuit unit 118 and the second circuit unit 122 may not be activated simultaneous. As another effect, electrical energy may be transferred via the device 100 either from the battery 102 to the inverter capacitor 114 or (alternatively) from the inverter capacitor 114 to the battery 102. An alternating exchange of electrical energy prevents the loss of electrical energy while providing the ability to achieve the battery current I1 for electrochemical impedance spectroscopy. The device 100 may be configured to sequentially activate the first circuit unit 118 and the second circuit unit 122 in successive periods. Further, the device 100 may be configured such that if one of the two circuit units 118, 122 is activated that the other circuit unit 122, 118 is then deactivated. In that only one of the two circuit units 118, 122 alone may be active at any given time, the two circuit units 118, 122 may share components of the device 100. As an effect, the device 100 may be compact and inexpensive. The device 100 may be configured to deactivate both the circuit units 118, 122.

In an example, the device 100 includes a control unit 126. The control unit 126 may have a one-piece design. In another example, the control unit 126 may include multiple sub-units. The sub-units of the control unit 126 may be arranged in a distributed manner. The control unit 126 may be coupled to the first circuit unit 118 and to the second circuit unit 122. For example, the control unit 126 may be coupled to a control terminal of the first semiconductor switch 152. A semiconductor switch may, for example, be formed by a transistor, such as a field effect transistor, in particular a MOS-FET. The first semiconductor switch 152 may, for example, be formed by a field-effect transistor, so that the control unit 126 is coupled, for example, to the gate terminal of the field-effect transistor. The second semiconductor switch 154 may be formed by a field-effect transistor. The control unit 126 may be coupled to a control terminal of the second semiconductor switch 154 (not shown in Figures 2-4). If the second semiconductor switch 154 is formed by a field-effect transistor, the control unit 126 may be coupled to a gate terminal of the corresponding field-effect transistor. The control unit 126 may also be coupled to a control terminal of the third semiconductor switch 156. The third semiconductor switch may be formed by a field effect transistor. In this case, the control unit may be coupled to a gate terminal of the field effect transistor.

In an example, the control unit 126 is configured to control the first and second circuit units 118, 122 such that either the first circuit unit 118 or (alternatively) the second circuit unit is and/or becomes activated. In an example, the first circuit unit 118 may be activated or deactivated via the second semiconductor switch 154. In an example, the second circuit unit 122 may be activated or deactivated via the third semiconductor switch 156. In an example, the control unit 126 may be configured to control the second semiconductor switch 154 such that the second semiconductor switch 154 is in either an open state or a closed state. Further, in an example, the control unit 126 may be configured to control the third semiconductor switch 156 such that the third semiconductor switch 156 is in either an open state or a closed state. As an effect, the control unit 126 may control the two circuit units 118, 122 that only one of the two circuit units 118, 122 is activated at the same time.

In an open state, a semiconductor switch may also be referred to as an open semiconductor switch. An open semiconductor switch interrupts an electrical connection. In the closed state, a semiconductor switch may also be referred to as a closed semiconductor switch. A closed semiconductor switch re-establishes the electrical connection.

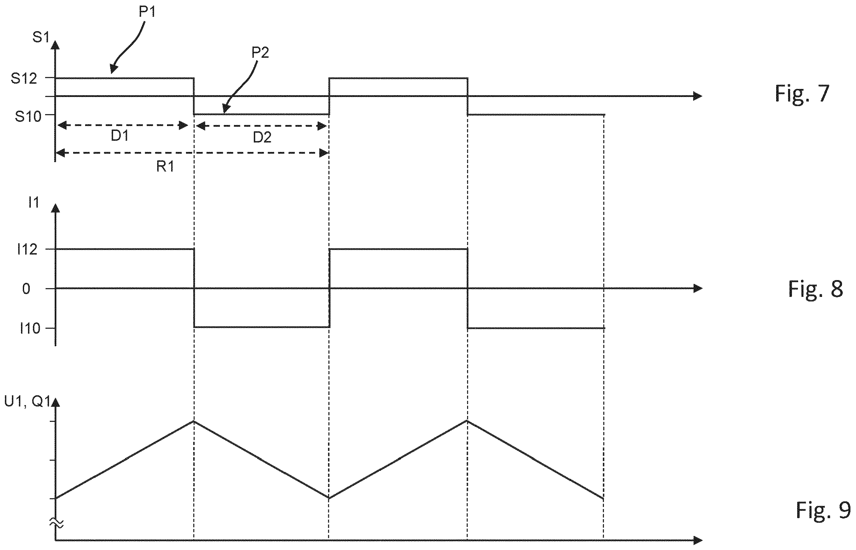

In an example, the device 100 is configured to receive or generate a reference signal S1. Figure 7 schematically illustrates an example of a signal waveform of the reference signal S1. The reference signal S1 may represent a plurality of consecutive reference periods R1. The reference signal S1 can be an alternating signal, in particular a rectangular alternating signal. As an effect, each reference period R1 may be divided into a first reference period part P1 and a second reference period part P2. The reference signal S1 can also be configured as a periodic signal. In Figure 7, the reference signal S1 is shown as an alternating, rectangular signal. The duration D1 of the first reference period part P1 and the duration D2 of the second reference period part P2 may be equal.

In an example, the control unit 126 of the device 100 may be configured to generate the reference signal S1. In another example, the control unit 126 of the device 100 may be configured to receive the reference signal S1, such as via a signal input 226.

In an example, it may be provided that during each first reference period part P1, electrical energy is transferred from the battery 102 via the device 100 to the inverter capacitor 114. Further, in an example, it may be provided that during each second reference period part P2, electrical energy is (re)transferred from the inverter capacitor 114 to the battery 102 via the device 100. In view that the reference signal S1 may be configured as an alternating signal, so that a first reference period part P1 is followed by a second reference period part P2, and vice versa, it can be achieved that electrical energy is exchanged alternately between the battery 102 and the inverter capacitor 114.

In an example, the device 100, in particular the associated control unit 126, is configured to activate the first circuit unit 118 during each first reference period part P1 and/or deactivate the second circuit unit 122 during each first reference period part P1. To deactivate the second circuit unit 122, the device 100, in particular the associated control unit 126, may control the third semiconductor switch 156 such that the third semiconductor switch 156 is in an open state. The device 100, in particular the associated control unit 126, may be configured to activate the first circuit unit 118 by the device 100, in particular the associated control unit 126, controlling the second semiconductor switch 154 such that the second semiconductor switch 154 is in the closed state, while the device 100, in particular the associated control unit 126, controls the first semiconductor switch 152 such that the first semiconductor switch 152 is alternately closed and opened. As a result, if the first semiconductor switch 152 is closed, a current flows from a first terminal of the battery 102 (in particular in the following order) via the first connection line 222, the first battery terminal 104, the second semiconductor switch 154 (which is closed when the first circuit unit 118 is activated), the first inverter terminal 108, the inverter capacitor 114, the second inverter terminal 110, the second diode 144, the inductor 116, the first semiconductor switch 152, the resistor 216 (if present), the second battery terminal 106, and the second connecting line 224 to a second terminal of the battery 102. If the first semiconductor switch 152 is subsequently opened, the aforementioned current can no longer flow from one terminal of the battery 102 to the other terminal of the battery 102. However, it should be noted that said current also flows through the inductor 116, wherein said current may not change abruptly. As an effect, said current now flows from the inductor 116 (in particular in the following order) via the first diode 142, the second semiconductor switch 154, the first inverter terminal 108, the inverter capacitor 114, the second inverter terminal 110, and the second diode 144 back to the inductor 116.

The alternating closing and opening of the first semiconductor switch 152 (while the first circuit unit 118 is activated) charges the inverter capacitor 114, and therefore causing the inverter capacitor 114 to store electrical energy. The control unit 126 may be coupled to the control input, in particular a gate terminal, of the first semiconductor switch 152. The control unit 126 may be configured to control the first semiconductor switch 152 via the control input with a control signal such that the first semiconductor switch 152 alternates between the open state and the closed state at a control frequency, which is in particular between 10 kHz and 1 MHz. The control frequency of the control signal may be 100 kHz, for example. The control frequency may also be referred to as switching frequency. The frequency of the reference signal S1 may be referred to as the reference frequency. In an example, the control frequency may be greater than the reference frequency by a factor of at least ten (ten). In an example, the reference frequency is between 5 Hz and 200 Hz, in particular 10 Hz. Against this background, in an example it may be provided that the reference frequency is 10 Hz and the control frequency is 100kHz. As an effect, a plurality of 10000 changes between the closed state and the open state of the first semiconductor switch 152 may be performed during each first reference period part P1. Figure 8 schematically illustrates an example of the battery current I1. During each first reference period part P1, an averaged and/or low-pass filtered battery current I1 may include the value 112. In an example, the device 100, in particular the associated control unit 126, may be configured to control the control signal to control the first semiconductor switch 152 during the activated first circuit unit 118 such that the time-averaged battery current I1 has the predefined value 112. The device 100, in particular the associated control unit 126, may be configured to adjust the frequency and/or a pulse width modulation of the control signal to achieve the predefined value 112 for the battery current I1.

In this example, the positive battery current I1 (with the value 112) flows during each first reference period part P1. As an effect, an amount of charge Q 1 of the inverter capacitor 114 increases during each first reference period part P1. As a further effect, an amount of charge of the battery 102 decreases during each first reference period part P1. As a still further effect, the voltage U1 across the inverter capacitor 114 (or between the two inverter terminals 108, 110) increases. Figure 9 schematically illustrates the amount of charge Q1 of the inverter capacitor 114 and/or the voltage U1 across the inverter capacitor 114. In light of the foregoing explanations, it may be noted that the activated, first circuit unit 118 may be used to transfer electrical energy from the battery 102 to the inverter capacitor 114.

In an example, the device 100, in particular the associated control unit 126, is configured to activate the second circuit unit 122 during each second reference period part P2 and/or deactivate the first circuit unit 118 during each second reference period part P2. To deactivate the first circuit unit 118, in particular the associated control unit 126, may control the second semiconductor switch 154 such that the second semiconductor switch 154 is in an open state. The device 100, in particular the associated control unit 126, may be configured to activate the second circuit unit 122 by the device 100, in particular the associated control unit 126, controlling the third semiconductor switch 156 such that the third semiconductor switch 156 is in the closed state, while the device 100, in particular the associated control unit 126, controls the first semiconductor switch 152 such that the first semiconductor switch 152 is alternately closed and opened. As a result, if the first semiconductor switch 152 is closed, a current flows from the first terminal of the inverter capacitor 114 (in particular in the following order) via the first inverter terminal 108, the second semiconductor switch 156, the inductor 116, the first semiconductor switch 152, the resistor 216 (if present), the third diode 146, and the second inverter terminal 110 to the second terminal of the inverter capacitor 114. If the first semiconductor switch 152 is subsequently opened, the aforementioned current can no longer flow from the first terminal of the inverter capacitor 114 to the second terminal of the inverter capacitor 114. However, it should be noted that said current also flows through the inductor 116, wherein said current may not change abruptly. As an effect, said current now flows from the inductor 116 (in particular in the following order) via the first diode 142, the first battery terminal 104, the first connection line 222, the battery 102, the second connection line 224, the second battery terminal 106, the third diode 146, the second inverter terminal 110, the inverter capacitor 114, the first inverter terminal 108, and the second semiconductor switch 156 back to the inductor 116.

The battery 102 is charged by the alternating closing and opening of the first semiconductor switch 152 (while the second semiconductor switch 154 is activated), in particular so that the battery 102 stores (additional) electrical energy. The additional energy may correspond at least approximately to the energy previously transferred (see above) from the battery 102 to the inverter capacitor 114. The control unit 126 may be coupled to the control input, in particular the gate terminal, of the first semiconductor switch 152. Further, the control unit may be configured to control the first semiconductor switch 152 via the control input with the control signal such that the first semiconductor switch 152 changes between the open state and the closed state with the control frequency. The control frequency may, for example, be between 10 kHz and 1 MHz, in particular 100 kHz. It was previously explained that the reference frequency may be, for example, between 5 Hz and 200 Hz, in particular 10 Hz. As an effect, several 10000 changes between the closed state and the open state of the first semiconductor switch 152 may be performed during each second reference period part P2. In Figure 8, an example of the battery current I1 is shown schematically. During each second reference period part P2, an averaged and/or low-pass filtered battery current I1 may include the value I10. In an example, the device 100, in particular the associated control unit 126, may be configured to control the control signal to control the first semiconductor switch 152 during the activated second circuit unit 122 such that the time-averaged battery current I1 has the predefined value I10. In an example, the value I12 may be positive and the value I10 may be negative. As an effect, the battery current I1 may flow in one direction with a value I12 (for example, through the first connection line 222 and/or the inductor 116) during the activated first circuit unit 118 and in a reverse direction with a value I10 (for example, through the first connection line 222 and/or the inductor 116) during the activated second circuit unit 122. In an example, the magnitudes of the values I12, I10 may be at least approximately equal. As an effect, during a first reference period part P1 and during a subsequent second reference period part P2, currents of at least approximately equal magnitude may flow in reverse directions.

In an example, the negative battery current I1 (with the value I10) flows during each second reference period part P2. As an effect, the amount of charge Q1 of the inverter capacitor 114 decreases during every second reference period part P2. As a further effect, the amount of charge of the battery 102 increases during every second reference period part P2. As a further effect, the voltage U1 across the inverter capacitor 114 (or between the two inverter terminals 108, 110) decreases. Figure 9 schematically shows the amount of charge Q1 of the inverter capacitor 114 and/or the voltage U1 across the inverter capacitor 114. In light of the foregoing explanations, it may be noted that the activated, second circuit unit 122 may be used to transfer electrical energy from the inverter capacitor 114 to the battery 102. In an example, the device 100, in particular the control unit 126, may be configured to control the first semiconductor switch 152 via the control signal during a first reference period part P1 and a subsequent second reference period part P2 such that at least 80%, at least 85%, at least 90%, or at least 95% of the energy transferred from the battery 102 to the inverter capacitor 114 during the first reference period part P1 is transferred back from the inverter capacitor 114 to the battery 102 in the subsequent second reference period part P2. In an example, the device 100, in particular the associated control unit 126, may be configured to change the control frequency of the control signal and/or a pulse width of the control signal to achieve the aforementioned rate, in particular of at least 80%. Said rate may represent an efficiency as well.

It was previously explained that Figure 2 schematically illustrates an example of the device 100. The device 100 may include a first string 132, a second string 134, and a third string 136. The first string 132 may extend from the first battery terminal 104 to the second battery terminal 106. The second string 134 may also extend from the first battery terminal 104 to the second battery terminal 106. The first string 132 and the second string 134 may extend in parallel from the first battery terminal 104 to the second battery terminal 106. The first string 132 includes the first diode 142 and the first semiconductor switch 152. The first string 132 may further include other components, such as the resistor 216. The first diode 142, the first semiconductor switch 152 and, if present, other components of the first string 132, such as the resistor 216, may be connected in series. The second string 134 includes the second semiconductor switch 154, the third semiconductor switch 156, the second diode 144, and the third diode 146. The second semiconductor switch 154, the third semiconductor switch 156, the second diode 144, the third diode 146, and, if present, further components of the second string 134, may be connected in series. A forward direction of the first diode 142 may be directed towards the first battery terminal 104. The first, second and third semiconductor switches 152, 154, 156 may each be controllable by the control unit 126. Each semiconductor switch 152, 154, 156 may be configured as a transistor, in particular a field effect transistor, such as a MOS-FET. Each semiconductor switch 152, 154, 156 may include a control terminal, such as a gate terminal. The control terminal of each semiconductor switch 152, 154, 156 may be coupled to the control unit 126 via a (particularly separate) control line. The control unit 126 may be configured to control each semiconductor switch 152, 154, 156 individually via the respective control line and the respective control terminal. As an effect, the control unit 126 may, for example, activate the first circuit unit 118 and simultaneously deactivate the second circuit unit 122, or vice versa. The third string 136 may extend from a first node 182 to a second node 184. The first node 182 may be disposed in the first string 132 between the first diode 142 and the first semiconductor switch 152. The second node 184 may be disposed in the third string 136 between the third semiconductor switch 156 and the second diode 144. The third string 136 may include the inductor 116. A forward direction of the second diode 144 may be directed toward the second node 184. A third node 186 may be disposed in the second string 134 between the second semiconductor switch 154 and the third semiconductor switch 156. A fourth node 188 may be disposed between the second diode 144 and the third diode 146. A forward direction of the third diode 146 may be directed toward the fourth node 188. The first inverter terminal 108 may be coupled to the third node 186. The second inverter terminal 110 may be coupled to the fourth node 188. In an example, a filter capacitor 220 may be coupled between the third node 186 and the fourth node 188. A capacitance of the filter capacitor 220 may be much smaller (in particular by at least a factor of 100) than a capacitance of the inverter capacitor 114, such that the energy storable by the filter capacitor 220 is negligible.

[0099] The system 19 may include another unit (not shown) configured to perform electrochemical impedance spectroscopy based on the battery current I1. This unit may also be referred to as a spectroscopy unit. The spectroscopy unit may be coupled to the battery 102 and/or the battery terminals 104, 106 so that the spectroscopy unit can measure a voltage, referred to as battery voltage, of the battery 102. The spectroscopy unit may further be configured to measure the battery current I1. The spectroscopy unit may be configured to determine an impedance of the battery 102 and/or a state, in particular a health state, of the battery 102 based on the battery voltage, which is measured, when the currents I1 is present.

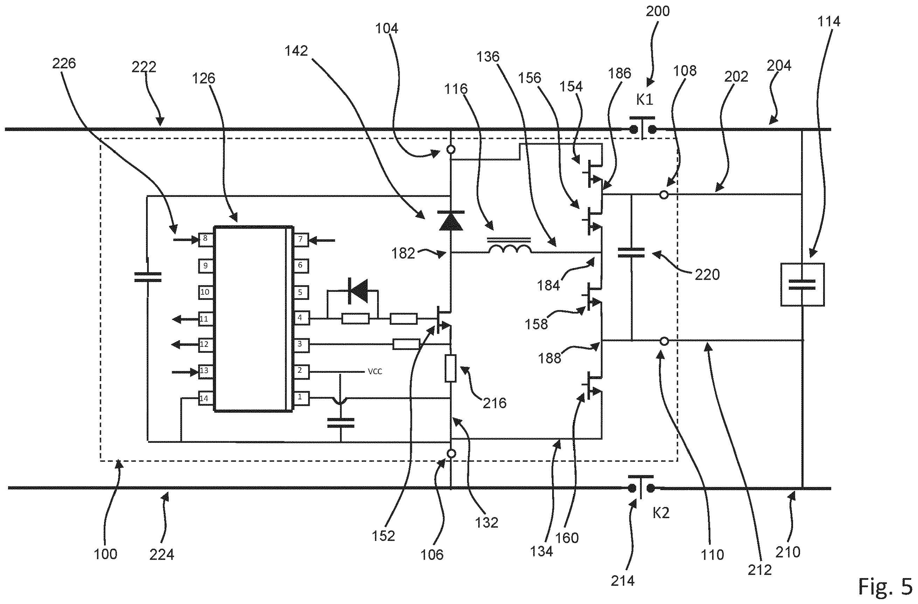

Figure 5 schematically illustrates another example of the device 100. For the device 100 of Figure 5, reference is made to the preceding explanations, preferred features, technical effects and advantages in an analogous manner as explained in connection with Figures 1-4. The example of the device 100 of Figure 5 differs from the device 100 as schematically shown in Figure 2, for example, in that the second diode 144 is replaced by a fourth semiconductor switch 158 and the third diode 146 is replaced by a fifth semiconductor switch 160. Replacing the two diodes 144, 146 by a respective semiconductor switch 158, 160 offers the advantage that a voltage drop across the diodes 144, 146 is avoided. As an effect, a more efficient transfer of electrical energy between the battery 102 and the inverter capacitor 114, and vice versa, can be achieved via the device 100.

In an example, a control terminal of each of the two further semiconductor switches 158, 160 may be coupled to the control unit 126 via a respective control lines. The control unit 126 may be configured to individually control each of the two further semiconductor switches 158, 160.

In an example, the device 100, in particular the associated control unit 126, is configured to activate the first circuit unit 118 by closing the second and fourth semiconductor switches 154, 158, while the device 100, in particular the associated control unit 126, is configured to alternately close and open the first semiconductor switch 152. The device 100, in particular the associated control unit 126, may be configured to deactivate the first circuit unit 118 by opening the second and fourth semiconductor switches 154, 158.

In an example, the device 100, in particular the associated control unit 126, is configured to activate the second circuit unit 122 by a closing of the third and fifth semiconductor switches 156, 160, while the device, in particular the associated control unit 126, is configured to alternately close and open the first semiconductor switch 152. The device 100, in particular the associated control unit 126, may be configured to deactivate the second circuit unit 122 by opening the third and fifth semiconductor switches 156, 160.

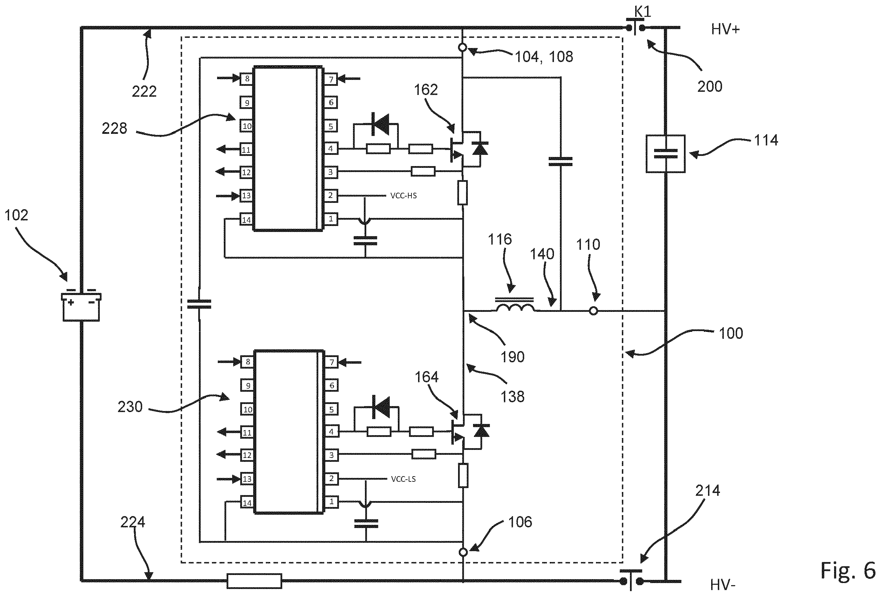

Figure 6 schematically illustrates another example of the device 100. For the device 100 of Figure 6, reference is made - as far as possible - to the preceding explanations, preferred features, technical effects and advantages in an analogous manner as previously explained for the device 100.

The device 100 of Figure 6 includes the first battery terminal 104. The first battery terminal 104 may simultaneously form the first inverter terminal 108. Alternatively or additionally, the first inverter terminal 108 may be coupled to the first battery terminal 104. The device 100 further includes a second battery terminal 106 and a second inverter terminal 110. The device 100 includes a fourth string 138 and a fifth string 140. The fourth string 138 extends from the first battery terminal 104 to the second battery terminal 106. The fourth string 138 may include a sixth semiconductor switch 162 and a seventh semiconductor switch 164. The sixth semiconductor switch 162 and the seventh semiconductor switch 164 may be coupled in series. The fourth string 138 may include a fifth node 190 disposed between the sixth semiconductor switch 162 and the seventh semiconductor switch 164. The fifth string 140 may extend from the fifth node 190 to the second inverter terminal 110. The fifth string 140 may include the inductor 116. In an example of the device 100 of Figure 6, the first circuit unit 118 and the second circuit unit 122 may include identical components of the device 100. The first circuit unit 118 may include the sixth semiconductor switch 162, the inductor 116, and the seventh semiconductor switch 164. The control unit 126 of the device 100 may include a first sub-control section 228 and a second sub-control section 230. In the embodiment of the device 100 of Figure 6, the second circuit unit 122 is deactivated as soon as the first circuit unit 118 is activated, and vice versa. For the device 100 of figure 6, it is envisaged that the switch 200 is closed and the switch 214 is opened. In an example, the device 100, in particular the associated control unit 126, may be configured to control the switch 200 such that the switch 200 is closed and to control the switch 214 such that the switch 214 is open.

The device 100, in particular the associated control unit 126, may be configured to activate the first circuit unit 118 by opening the sixth semiconductor switch 162, while the device 100, in particular the associated control unit 126, is configured to control the seventh semiconductor switch 164 to alternately close and open the seventh semiconductor switch 164. If the seventh semiconductor switch 164 is closed during the activated, first circuit unit 118, a current flows from a first terminal of the battery 102 via the first connecting line 222, the inverter capacitor 114, the second inverter terminal 110, the inductor 116, the seventh semiconductor switch 164, the second battery terminal 106, and the second connecting line 224 to a second terminal of the battery 102. If the seventh semiconductor switch 164 is subsequently opened during the activated, first circuit unit 118, the aforementioned current continues to flow through the inductor 116. It should be noted that the sixth semiconductor switch 162 includes a freewheeling diode and the seventh semiconductor switch 164 also includes a freewheeling diode. The aforementioned current, now originating from the inductor 116, flows via the freewheeling diode of the sixth semiconductor switch 162, the first battery terminal 104, the inverter capacitor 114, and the second inverter terminal 110 to the inductor 116. In this manner, energy can be transferred from the battery 102 to the inverter capacitor 114.

The device 100, in particular the associated control unit 126, may be configured to activate the second circuit unit 122 by opening the seventh semiconductor switch 164, while the device 100, in particular the associated control unit 126, is configured to control the sixth semiconductor switch 162 to alternately close and open the sixth semiconductor switch 162. When the sixth semiconductor switch 162 is closed during the activated, second circuit unit 122, a current flows from a first terminal of the inverter capacitor 114 via the switch 200, the first battery terminal 104, the sixth semiconductor switch 162, the inductor 116, and the second inverter terminal 110 to a second terminal of the inverter capacitor 114. If the sixth semiconductor switch 162 is subsequently opened during the activated, second circuit unit 122, the aforementioned current may continue to flow through the inductor 116. The aforementioned current, now originating from the inductor 116, flows through the inverter capacitor 114, the switch 200, the first connection line 222, the battery 102, the second connection line 224, the second battery terminal 106, the freewheeling diode of the seventh semiconductor switch 164 back to the inductor 116. In this manner, energy can be transferred from the inverter capacitor 114 to the battery 102.

Referring to Figures 1-6, several examples of the device 100 have been schematically illustrated. In an example, the device 100 may be a component of a system 196. Against this background, several examples of the system 196 may be schematically illustrated in Figures 1-6 as well. In an example, the system 196 further includes the battery 102 and the inverter 112. The inverter 112 includes the inverter capacitor 114. The inverter 112 is preferably a bridge inverter.

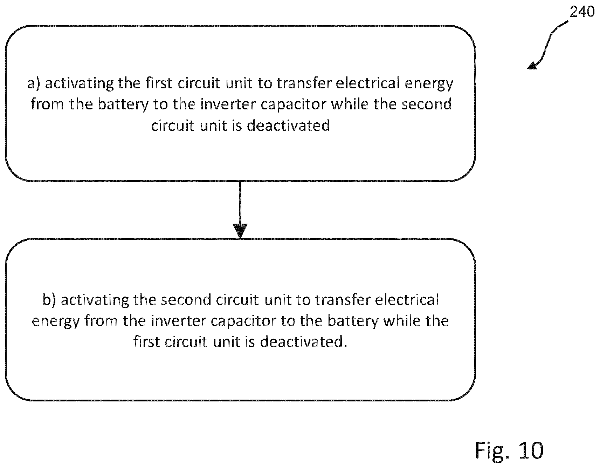

Figure 10 illustrates an example of a method 240 for the device 100. The method 240 includes the steps:
a) activating the first circuit unit 118 to transfer electrical energy from the battery 102 to the inverter capacitor 114 while the second circuit unit 122 is deactivated, and
b) activating the second circuit unit 122 to transfer electrical energy from the inverter capacitor 114 to the battery 102 while the first circuit unit 118 is deactivated.

For the method, reference is made to the preceding explanations, preferred features, technical effects and/or advantages in an analogous manner as previously explained for the device 100, and/or the system 196.

Although the described exemplary embodiments disclosed herein focus on devices, systems, and methods for using same, the present disclosure is not necessarily limited to the example embodiments illustrate herein.

The systems and methods described herein may at least partially be embodied by a computer program or a plurality of computer programs, which may exist in a variety of forms both active and inactive in a single computer system or across multiple computer systems. For example, they may exist as software program(s) included of program instructions in source code, object code, executable code or other formats for performing some of the steps. Any of the above may be embodied on a computer-readable medium, which may include storage devices and signals, in compressed or uncompressed form.

As used herein, the term "computer" refers to any electronic device comprising a processor, such as a general-purpose central processing unit (CPU), a specific-purpose processor or a microcontroller. A computer is capable of receiving data (an input), of performing a sequence of predetermined operations thereupon, and of producing thereby a result in the form of information or signals (an output). Depending on the context, the term "computer" will mean either a processor in particular or more generally a processor in association with an assemblage of interrelated elements contained within a single case or housing.

The term "processor" or "processing unit" refers to a data processing circuit that may be a microprocessor, a co-processor, a microcontroller, a microcomputer, a central processing unit, a field programmable gate array (FPGA), a programmable logic circuit, and/or any circuit that manipulates signals (analog or digital) based on operational instructions that are stored in a memory. The term "memory" refers to a storage circuit or multiple storage circuits such as read-only memory, random access memory, volatile memory, non-volatile memory, static memory, dynamic memory, Flash memory, cache memory, and/or any circuit that stores digital information.

As used herein, a "computer-readable medium" or "storage medium" may be any means that can contain, store, communicate, propagate, or transport a computer program for use by or in connection with the instruction execution system, apparatus, or device. The computer-readable medium may be, for example but not limited to, an electronic, magnetic, optical, electromagnetic, infrared, or semiconductor system, apparatus, device, or propagation medium. More specific examples (non-exhaustive list) of the computer-readable medium may include the following: an electrical connection having one or more wires, a portable computer diskette, a random-access memory (RAM), a read-only memory (ROM), an erasable programmable read-only memory (EPROM or Flash memory), an optical fiber, a portable compact disc read-only memory (CDROM), a digital versatile disc (DVD), a Blu-ray disc (BD), and a memory card.

It is noted that the embodiments above have been described with reference to different subject-matters. In particular, some embodiments may have been described with reference to method-type claims whereas other embodiments may have been described with reference to apparatus-type claims. However, a person skilled in the art will gather from the above that, unless otherwise indicated, in addition to any combination of features belonging to one type of subject-matter also any combination of features relating to different subject-matters, in particular a combination of features of the method-type claims and features of the apparatus-type claims, is considered to be disclosed with this document.

Furthermore, it is noted that the drawings are schematic. In different drawings, similar or identical elements are provided with the same reference signs. Furthermore, it is noted that in an effort to provide a concise description of the illustrative embodiments, implementation details which fall into the customary practice of the skilled person may not have been described. It should be appreciated that in the development of any such implementation, as in any engineering or design project, numerous implementation-specific decisions must be made in order to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill.

Finally, it is noted that the skilled person will be able to design many alternative embodiments without departing from the scope of the appended claims. In the claims, any reference sign placed between parentheses shall not be construed as limiting the claim. The word "include(s)" or "comprising" does not exclude the presence of elements or steps other than those listed in a claim. The word "a" or "an" preceding an element does not exclude the presence of a plurality of such elements. Measures recited in the claims may be implemented by means of hardware comprising several distinct elements and/or by means of a suitably programmed processor. In a device claim enumerating several means, several of these means may be embodied by one and the same item of hardware. The mere fact that certain measures are recited in mutually different dependent claims does not indicate that a combination of these measures cannot be used to advantage.

Unless stated otherwise, terms such as "first" and "second" are used to arbitrarily distinguish between the elements such terms describe. Thus, these terms are not necessarily intended to indicate temporal or other prioritization of such elements.

## Claims

1. A device for generating a battery current at a battery, wherein the device comprises:
first and second battery terminals for connection to the battery;
first and second inverter terminals for connection to an inverter so that an inverter capacitor of the inverter can be coupled between the first inverter terminal and the second inverter terminal; and
an inductor;
wherein the device comprises a first circuit unit configured to form with the inverter capacitor a buck converter to transfer electrical energy from the battery to the inverter capacitor;
wherein the device comprises a second circuit unit configured to form with the inverter capacitor a boost converter to transfer electrical energy from the inverter capacitor to the battery; and
wherein the inductor is a component of both the first and second circuit units.

2. Device according to the preceding claim, wherein the device is configured to activate either the first circuit unit or the second circuit unit.

3. Device according to any of the preceding claims, wherein the device comprises a control unit coupled to the first and second circuit units, the control unit being configured to control the first and second circuit units such that either the first circuit unit or the second circuit unit is activated.

4. Device according to any of the preceding claims 2 or 3, wherein the device is configured to receive or generate an alternating reference signal representing successive reference periods each divided into a first reference period part and a second reference period part, wherein the device, in particular the associated control unit, is configured to activate the first circuit unit in each first reference period part and to deactivate the second circuit unit in each first reference period part, and wherein the device, in particular the associated control unit, is configured to activate the second circuit unit in each second reference period part and to deactivate the first circuit unit in each second reference period part.

5. Device according to any of the preceding claims, wherein the device comprises a first string, a second string and a third string, wherein the first and second strings each extend from the first battery terminal to the second battery terminal, wherein the first string comprises a first diode and a first semiconductor switch, wherein the second string comprises a second and third semiconductor switch and a second and third diode, which are connected one behind the other, wherein a forward direction of the first diode is directed towards the first battery terminal, wherein the first, second and third semiconductor switches are controllable by a or the control unit, wherein the third string extends from a first node, which is arranged in the first string between the first diode and the first semiconductor switch, to a second node, which is arranged in the second string between the third semiconductor switch and the second diode, wherein a forward direction of the second and/or third diodes is directed towards the second node, wherein the third string comprises the inductor, wherein the first inverter terminal is coupled to a third node arranged in the second string between the second and third semiconductor switches, and wherein the second inverter terminal is coupled to a fourth node arranged in the second string between the second and third diode.

6. Device according to the preceding claims, wherein the control unit is configured to activate the first circuit unit by closing the second semiconductor switch while alternately closing and opening the first semiconductor switch; and wherein the device is configured to deactivate the first circuit unit by opening the second semiconductor switch.

7. Device according to any of the preceding claims 5 to 6, wherein the device is configured to activate the second circuit unit by closing the third semiconductor switch while alternately closing and opening the first semiconductor switch; and wherein the device is configured to deactivate the second circuit unit by opening the third semiconductor switch.

8. Device according to any of the preceding claims 1 to 4, wherein the device comprises a first string, a second string and a third string, wherein the first and second strings each extend from the first battery terminal to the second battery terminal, wherein the first string comprises a first diode and a first semiconductor switch, wherein the second string comprises a second, third, fourth and fifth semiconductor switch, which are connected one behind the other, wherein the first to fifth semiconductor switches are controllable by a or the control unit, wherein the third string extends from a first node, which is arranged in the first string between the first diode and the first semiconductor switch, to a second node, which is arranged in the second string between the third and fourth semiconductor switches, wherein the third string comprises the inductor, wherein the first inverter terminal is coupled to a third node arranged in the second string between the second and third semiconductor switches, and wherein the second inverter terminal is coupled to a fourth node arranged in the second string between the fourth and fifth semiconductor switches.

9. Device according to the preceding claim, wherein the device is configured to activate the first circuit unit by closing the second and fourth semiconductor switches while alternately closing and opening the first semiconductor switch; and/or wherein the device is configured to deactivate the first circuit unit by opening the second and fourth semiconductor switches; and/or wherein the device is configured to activate the second circuit unit by closing the third and fifth semiconductor switches while alternately closing and opening the first semiconductor switch; and/or wherein the device is configured to deactivate the second circuit unit by opening the first and fifth semiconductor switches.

10. Device according to any of the preceding claims 5 to 9, wherein the first circuit unit comprises: the first and second battery terminals, the first and second inverter terminals, the first, second and third strings, the second semiconductor switch, either the second diode or the fourth semiconductor switch, the inductor, the first diode, and the first semiconductor switch; wherein the second circuit unit comprises: the first and second battery terminals, the first and second inverter terminals, the first, second and third strings, either the third diode or the fifth semiconductor switch, the third semiconductor switch, the inductor, the first diode, and the first semiconductor switch.

11. Device according to any of the preceding claims 1 to 4, wherein the first battery terminal is coupled to the first inverter terminal, wherein the device comprises a fourth string and a fifth string, wherein the fourth string extends from the first battery terminal to the second battery terminal, wherein the fourth string comprises a sixth and seventh semiconductor switch, wherein the fifth string extends from a fifth node, which is arranged in the fourth string between the sixth and seventh semiconductor switches, to the second inverter terminal, and wherein the fifth string comprises the inductor.

12. Device according to the preceding claims, wherein the device is configured to activate the first circuit unit by opening the sixth semiconductor switch while alternately closing and opening the seventh semiconductor switch; and/or wherein the device is configured to activate the second circuit unit by opening the seventh semiconductor switch while alternately closing and opening the seventh semiconductor switch.

13. System comprising: a battery, a device according to any of the preceding claims, and an inverter comprising an inverter capacitor.

14. System according to the preceding claim, wherein the inverter is a bridge inverter.

15. A method for a device comprising first and second battery terminals for connection to a battery, first and second inverter terminals for connection to an inverter such that an inverter capacitor of the inverter is coupled between the first inverter terminal and the second inverter terminal, and a inductor, wherein the device comprises a first circuit unit configured to form, together with the inverter capacitor, a buck converter, wherein the device comprises a second circuit unit configured to form, together with the inverter capacitor, a boost converter, wherein the inductor forms a part of both the first and second circuit units, and wherein the method comprises the steps of
a) activating the first circuit unit to transfer electrical energy from the battery to the inverter capacitor while the second circuit unit is deactivated, and
b) activating the second circuit unit to transfer electrical energy from the inverter capacitor to the battery while the first circuit unit is deactivated.
